# EUROPEAN PATENT SPECIFICATION

(11) **EP 3 152 865 B1**
(45) Date of publication and mention of the grant of the patent: **08.01.2020**
(21) Application number: 15731431.1
(22) Date of filing: 28.05.2015
(51) Int. Cl.: H04L 12/24, G06F 9/455, G06F 9/50, H04L 29/08

(54) **PROVISIONING AND MANAGING SLICES OF A CONSUMER PREMISES EQUIPMENT DEVICE**
BEREITSTELLUNG UND VERWALTUNG VON TRANCHEN EINER CUSTOMER-PREMISES-EQUIPMENT-VORRICHTUNG
FOURNITURE ET GESTION DE TRANCHES D'UN DISPOSITIF D'ÉQUIPEMENT DE LOCAUX DE CLIENT

(30) Priority: 09.06.2014 US 201414300168
(43) Date of publication of application: 12.04.2017
(73) Proprietor: Cisco Technology, Inc., San Jose, CA 95134-1706 (US)
(72) Inventor: BAUGHER, Mark J., San Jose, California 95134-1706 (US); NEDELTCHEV, Plamen, San Jose, California 95134-1706 (US); PERKOV, Luka, 10000 Zagreb (HR); THIMMANAIK, Tara K., Fremont, California 94539 (US)
(74) Representative: Noble, Nicholas
(86) International application number: PCT/US2015/032968
(87) International publication number: WO 2015/191300

(56) References cited:
- CN-A- 102 025 537
- ZHONGJIN LIU ET AL: "M2cloud", SIGCOMM, ACM, 2 PENN PLAZA, SUITE 701 NEW YORK NY 10121-0701 USA, 27 August 2013 (2013-08-27), pages 517-518, XP058030842, DOI: 10.1145/2486001.2491725 ISBN: 978-1-4503-2056-6

## Description

### FIELD OF THE DISCLOSURE

The disclosure generally relates to techniques for network device management. The disclosure relates more specifically to techniques for provisioning and managing slices of a consumer premises equipment device.

### BACKGROUND

The approaches described in this section are approaches that could be pursued, but not necessarily approaches that have been previously conceived or pursued. Therefore, unless otherwise indicated, it should not be assumed that any of the approaches described in this section qualify as prior art merely by virtue of their inclusion in this section.

Consumer premises equipment ("CPE" or "CPE device") is a device, such as a router, switch, internet access gateway, telephone, or a set-top box that is located at a subscriber premise and is connected to a telecommunications service provider, such as an internet service provider (ISP). For example, a CPE may be a router in a subscriber's home or office that obtains an internet connection from an ISP and provides the internet connection to other devices in the home, such as laptops, personal computers, and mobile devices in a subscriber network. In such a case, a network manager operated by an ISP typically manages the CPE by providing configuration instructions and monitoring requests to the CPE.

A user of a home network may wish to use the CPE for other services that are provided by third-party service providers that are different than the ISP such as, for example, home security services provided by a home security provider, teleworking service provided by a teleworking service provider, home automation services provided by a home automation provider, or entertainment services provided by an entertainment service provider.

M2cloud: Software Defined Multi-site Data Center Network Control Framework for Multi-tenant, by Zhongjin Liu, Yong Li, Li Su, Depeng Jin, Lieguang Zeng, Department of Electronic Engineering, Tsinghua University, Beijing 100084, SIGCOMM, P517-518 proposes M2cloud, a software defined frame-work providing scalable network control for multi-site data centers (DCs). M2cloud employs two-level controllers with decoupled functions, providing each tenant with flexible virtualization support in both intra- and inter-DC networks.

### BRIEF DESCRIPTION OF THE DRAWINGS

In the drawings:
FIG. 1 illustrates an example computer system including a consumer premises equipment that comprises a plurality of slices and a plurality of network managers that manage corresponding slices of the consumer premises equipment;
FIG. 2 illustrates an example process of provisioning a slice of a CPE for a tenant application and managing of the tenant application by a secondary network manager;
FIG. 3 illustrates an example process of a CPE obtaining a tenant application;
FIG. 4 illustrates another example process of obtaining a tenant application;
FIG. 5 is a block diagram that illustrates a computer system upon which embodiments of the disclosure may be implemented.

### SUMMARY

The scope of the invention is defined by the appended claims.

### DESCRIPTION OF EXAMPLE EMBODIMENTS

In the following description, for the purposes of explanation, numerous specific details are set forth in order to provide a thorough understanding of the present disclosure. It will be apparent, however, that the present disclosure may be practiced without these specific details. In other instances, well-known structures and devices are shown in block diagram form in order to avoid unnecessarily obscuring the present disclosure.

Embodiments are described herein according to the following outline:
- 1.0: General Overview
- 2.0: Structural and Functional Overview
- 3.0: Implementation Mechanisms-Hardware Overview
- 4.0: Extensions and Alternatives

### 1.0 GENERAL OVERVIEW

Techniques for provisioning and managing slices of a consumer premises equipment are described. In one approach, network managers controlled by third-party service providers (the "third-party network managers") may communicate with the CPE by sending communications to the CPE through a network manager operated by another entity, such as an ISP or a business that installed the router ("primary entity network manager"). However, such an approach results in disadvantages for both the primary entity and the third-party service providers. In such an approach, the primary entity network manager may have complete access to the communications sent from or to the third-party network managers and the third-party network managers must rely on the primary entity network manager for the transmission of each communication to or from the CPE. Additionally, the primary entity must bear the computing overhead caused by transmitting and receiving the additional traffic associated with the third-party network managers. As a result, improved approaches for allowing multiple service providers to use the same CPE are needed.

In an embodiment, a slice provisioning instruction to provision a slice of a customer premises equipment (CPE) for a tenant application is received at a customer premises equipment comprising one or more network interfaces from a root network manager. The slice provisioning instruction identifies at least one network interface of the one or more network interfaces to allocate to the slice. The slice of the CPE is provisioned, where provisioning the slice comprises allocating CPE resources including the at least one network interface to the slice of the customer premises equipment. The tenant application is obtained. Data associating the tenant application with the slice of the CPE is stored. A management instruction for managing the tenant application is received directly from a secondary network manager associated with the tenant application. The management instruction is executed only in relation to the slice.

### 2.0 STRUCTURAL AND FUNCTIONAL OVERVIEW

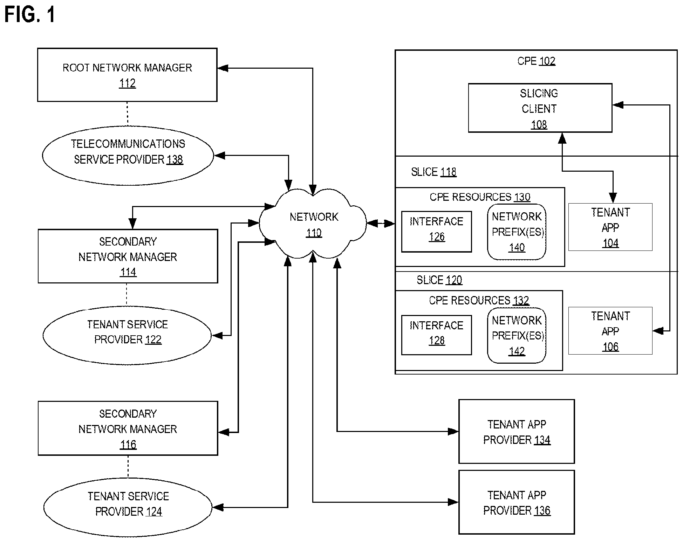

FIG. 1 illustrates an example computer system including a consumer premises equipment that comprises a plurality of slices and a plurality of network managers that manage corresponding slices of the consumer premises equipment. CPE 102 is consumer premises equipment such as router, switch, internet access gateway, telephone, or set-top box that is located at a subscriber premise.

CPE 102 is communicatively coupled with telecommunications service provider 138, which may own CPE 102 and may be an ISP server that sends and receives internet traffic to and from CPE 102 through network 110. CPE 102 is also communicatively coupled with tenant service provider 122 and tenant service provider 124 through network 110.Tenant service provider 122 may operate secondary network manager 114 and tenant service provider 124 may operate secondary network manager 116.

In an embodiment, tenant service provider 122, tenant service provider 124, telecommunications service provider 138 may be each be different entities. For example, telecommunications service provider 138 may be an ISP and tenant service provider 122 and tenant service provider 124 may each be different non-ISP entities that provide different services to the subscriber through CPE 102, such as teleworking services, home security services, home automation services, entertainment services, or other services. In other embodiments, the same service provider (e.g., telecommunications service provider 138) may operate both root network manager 112 and each of secondary network manager 114 and secondary network manager 116. In yet another embodiment, a single tenant service provider may operate both secondary network manager 122 and 124 but the tenant service provider may be a different entity than telecommunications service provider 138.

Root network manager 112 may manage CPE 102 by performing various functions such as configuration and monitoring of CPE 102. Root network manager 112 may be operated by telecommunications service provider 138 and may perform management operations upon CPE 102 on behalf of telecommunications service provider 138. In other embodiments, root network manager 112 may be operated by a subscriber that owns CPE 102 and subscribes to the telecommunications services of telecommunications service provider 138. For example, in some embodiments, root network manager 112 may be an application installed on a mobile device or personal computer owned by the subscriber.

Root network manager 112 may send slice provisioning instructions to CPE 102 that cause CPE 102 to provision one or more CPE slices for one or more tenant applications. A CPE slice, as used herein, is a set of CPE resources, which may include one or more network interfaces of the CPE and one or more network prefixes. Each slice may be associated with a secondary network manager that manages the CPE.

CPE 102 comprises slice 118, which includes CPE resources 130. CPE resources 130 include interface 126 and network prefix(es) 140. CPE 102 also comprises slice 120, which includes CPE resources 132. CPE resources 132 include interface 128 and network prefix(es) 142.Interfaces 126 and 128 may be physical network interfaces such as Wi-Fi SSIDs or Ethernet ports, or virtual network interfaces, such as layer-4 VPNs or layer-3 tunnels. Network prefix(es) 140 and 142 may be Internet Protocol address prefixes that are assigned to their corresponding interfaces (e.g. network prefix(es) 140 may be assigned to interface 126 and network prefix(es) may be assigned to interface 128). A slice may include other CPE resources. For example, in embodiments where multiple slices share an interface, CPE resources 130 may include memory or bandwidth on interfaces that are shared with other slice services of CPE 102. "Token buckets" and other known mechanisms may be used to allocate a portion of resources to multiple resource consumers and guarantee each consumer gets a minimum share of the particular resource.

Each slice may be associated with a tenant application on the CPE that communicates with a secondary network manager that manages the slice. For example, slice 118 is associated with tenant app 104 and slice 120 is associated with tenant app 106. Tenant app 104 receives and responds to management communications from secondary network manager 114 and tenant app 106 receives and responds to management communications from secondary network manager 116.

A tenant application may respond to management communications from a corresponding secondary network manager and may perform various management functions in relation to a corresponding slice as requested by the secondary network manager. For example, tenant app 104 may respond to management communications from secondary network manager 114 and may perform management functions at the request of secondary network manager 114. Management functions may include, but are not limited to, adding a name to a Wi-Fi SSID, configuring IEEE 802.1x on a Wi-Fi or Ethernet network interface, establishing an IPsec VPN between the CPE 102 and secondary network manager 114 or its data center. Other examples of management functions include "status" commands, including status commands to check the status of a network interface or the number or size of packets going through a logical or virtual network interface such as a VPN.

A slice may be allocated for a particular service and the secondary network manager that manages the tenant application associated with the slice may be operated by the service provider of the particular service. For example, slice 118 may be allocated for teleworking services and secondary network manager 114 may be operated by tenant service provider 122, which may be a provider of teleworking service such as a business enterprise.

Management communications received at CPE 102 may be routed to different slices of CPE 102 depending on which network interface the data is received at and which network prefix the data was addressed to. For example, secondary network manager 114 may send a management communication to manage slice 118. Once the management communication is received at CPE 102, CPE 102 may route the management communication to tenant app 104 in slice 118 based on a determination that the communication is received at interface 126 and is addressed to any of network prefix(es) 140 or to the actual network address of tenant app 104.

Slicing client 108 may receive and execute slice provisioning instructions received from root network manager 112 at CPE 102. Slicing client 108 may provision one or more slices such as slice 118 and slice 120. In some embodiments, slicing client 108 may be configured to determine at least some CPE resources to allocate to a slice in response to a slice provisioning instructions based on availability of different CPE resources and/or the service for which the slice is being allocated. In other embodiments, root network manager 112 may identify to slicing client 108 each of the CPE resources to allocate to a slice and slicing client 108 may store data associating the identified CPE resources with the corresponding slice.

Different tenant applications on a CPE may be obtained from different sources associated with the service providers to which the tenant applications correspond. For example, tenant app 104 may be obtained from tenant app provider 134, which is associated with tenant service provider 122, and tenant app 106 may be obtained from tenant app provider 136, which is associated with tenant service provider 124. In other embodiments, tenant applications may be obtained directly from their corresponding secondary network managers. For example, tenant app 104 may be obtained from secondary network manager 114 and tenant app 106 may be obtained from secondary network manager 116.

In some embodiments, tenant app 104 and/or tenant app 106 may be virtual machines. The use of virtual machines may allow the data in slices 118 and 120 to be isolated from the other slices that may be managed by different secondary network managers. The virtual machines may be user-mode virtual machine or kernel-mode virtual machines. In embodiments where tenant app 104 and tenant app 106 are virtual machines, other applications managed by secondary network manager 114 and secondary network manager 116 may operate within tenant app 104 and tenant app 106.

Communications between CPE 102 and root network manager 112, secondary network manager 114, and secondary network manager 116 may adhere to the Consumer Premises Equipment Wide Area Network Management Protocol (CWMP) TR-069 protocol, the Simple Network Management Protocol (SNMP) protocol, Network Configuration Protocol (NETCONF), or some other communication protocol.

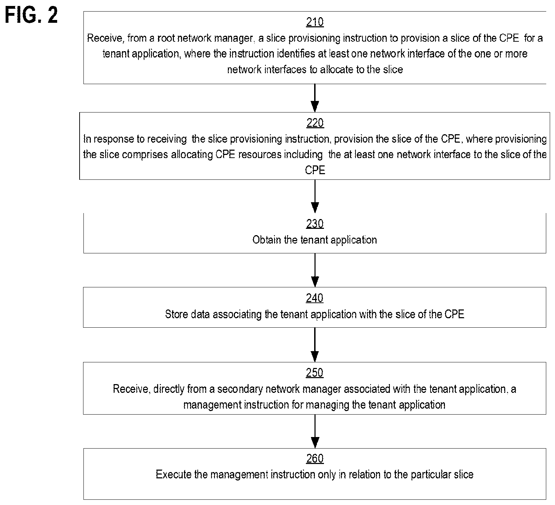

FIG. 2 illustrates an example process of provisioning a slice of a CPE for a tenant application and managing of the tenant application by a secondary network manager. The process of FIG. 2 may be performed at CPE 102.

At block 210, CPE 102 receives, from a root network manager, a slice provisioning instruction to provision a slice of the CPE for a tenant application, where the slice provisioning instruction identifies at least one network interface of one or more network interfaces of the CPE to allocate to the slice. In an embodiment, the slice provisioning instruction is a CWMP slice provisioning instruction that conforms to the CWMP /TR-069 protocol. The slice provisioning instruction may also adhere to the CWMP TR-098, TR-181, and/or TR-157 data model. In such an embodiment, root network manager 112, secondary network manager 114, and secondary network manager 116 may be auto configuration servers (ACS). In other embodiments, the slice provisioning instruction may adhere to a different management protocol. For example, in another embodiment, the slice provisioning instruction may adhere to the SNMP protocol and the Structure Management Information, SMIv1, or SMIv2 data model. In yet another embodiment, the slice provisioning instruction may adhere to NETCONF protocol and the YANG data model.

At block 220, in response to receiving the slice provisioning instruction, CPE 102 provisions the slice of the CPE, where provisioning the slice comprises allocating CPE resources including the at least one network interface to the slice of the CPE.

The slice provisioning instruction may also specify other CPE resources in addition to the network interfaces to allocate to the slice. In other embodiments, the instruction may specify only some of the CPE resources to allocate and slicing client 108 may determine at least some of the CPE resources to allocate to the slice based on availability. In another embodiment, the identification of resources to allocate to the slice may be communicated to the CPE from another entity such as a user device on a subscriber network to which the CPE 102 is connected.

In some embodiments, the amount and types of resources allocated to a slice may vary depending on the type of service the slice is being allocated for. For example, an entertainment service may require more bandwidth to be allocated to its corresponding slice than a home security service.

Root network manager 112 may send the slice provisioning instruction in response to receiving a request from a tenant service provider or at the request of a subscriber with whom CPE 102 is associated. For example, a subscriber of telecommunications service provider 138 may purchase home security services from tenant service provider 122. As a result, tenant service provider 122 or the subscriber may notify telecommunications service provider 138 to provision a slice of CPE 102 for management by secondary network manager 114, which is associated with tenant service provider 122.

In some embodiments, if CPE 102 has insufficient resources to allocate to a new slice, CPE 102 may indicate to root network manager 112 which resources are unavailable and may deny the slice provisioning instruction. If the slice provisioning instruction specified a set of resources to allocate to the new slice and a particular resource of the set of resources is not functioning properly, CPE 102 may indicate to root network manager 112 that the particular resource is not functioning properly and therefore cannot be allocated through a slice provisioning instruction.

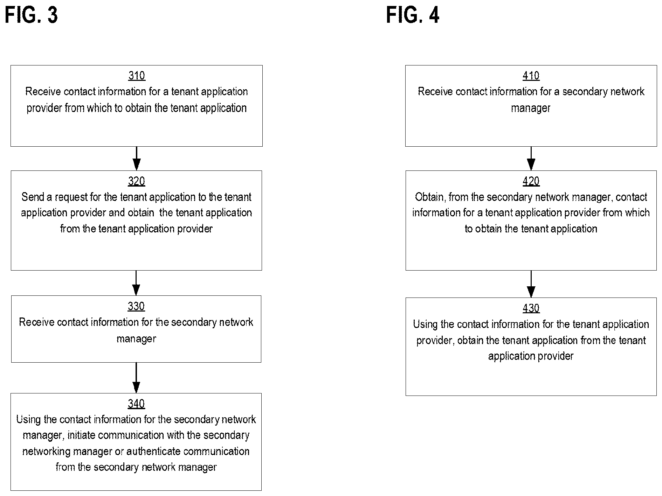

At block 230, CPE 102 obtains the tenant application. A CPE host software at CPE 102 may obtain the tenant application from a remote network server. FIG. 3 and FIG. 4 illustrate example processes for obtaining the tenant application and are discussed further in other sections herein.

At block 240, CPE 102 stores data associating the tenant application with the slice of the CPE. A table, mapping or other data structure maintained in volatile or non-volatile memory may be used to associate tenant applications with slices. In some embodiments, a tenant application only uses CPE resources that have been allocated to the slice of the CPE associated with the tenant application.

At block 250, CPE 102 receives, directly from a secondary network manager associated with the tenant application, a management instruction for managing the tenant application. At block 260, CPE 102 executes the management instruction only in relation to the slice. For example, CPE 102 may receive a management instruction for managing slice 118 directly from secondary network manager 114. CPE 102 may forward the management instruction directly to tenant app 104 associated with slice 118 and may not forward the management instruction to any other slices of CPE 102.

Secondary network manager 114 may send management instructions for the initial configuration of a slice and for the subsequent monitoring and configuration of the slice as appropriate.

During the initial configuration of a slice, the secondary network manager may specify network prefix(es) to associate with a slice's network interfaces. For example, secondary network manager 114 may configure slice 118 by providing, to tenant app 104, network prefix(es) to associate with interface 126. Similarly, secondary network manager 116 may configure tenant app 106 by providing network prefix(es) 140 to tenant app 106. The received network prefix(es) may be stored at CPE 102 in association with the corresponding slices and advertised on the slices' dedicated or shared network interfaces to hosts that use the network interfaces for communication.

Secondary network manager 114 may also specify particular policies for application to slice 118, such as forwarding policies or firewall policies that may be applied to data routed to slice 118. Secondary network managers 114 and 116 may configure their corresponding slice according to different policies depending on what type of service provider the secondary network manager is associated with. For example, slices associated with a teleworking service provider may have different forwarding policies than a slice associated with an entertainment service provider.

Management communications may be received at CPE 102 from any of root network manager 112, secondary network manager 114, and secondary network manager 116. In some embodiments, a management communication is routed to a corresponding slice based on the network interface at which the management communication was received and the network prefix used in the address to which the management communication was directed. For example, a management instruction may be routed to tenant app 104 in slice 118 if the instructions is received at interface 126 and the management instruction is addressed to an addresses that includes at least one network prefix of network prefix(es) 140.

Other slices may be provisioned by root network manager 112 on CPE 102 and configured by other secondary network managers associated with other tenant service providers. For example, after the provisioning and configuring of slice 118, root network manager 112 may provision slice 120 and secondary network manager 116, which is associated with tenant service provider 124, may configure slice 120. Secondary network managers 114 and 116 may manage their respective slices of CPE 102 and the respective tenant applications that are associated with those slices. Root network manager 112 may manage aspects of CPE 102 other than tenant app 104, tenant app 106, and the CPE resources included in slices 118 and 120.

FIG. 3 illustrates an example process of a CPE obtaining a tenant application. The process of FIG. 3 may be performed at CPE 102. At block 310, CPE 102 receives contact information for a tenant application provider from which to obtain the tenant application. The contact information may include, for example, an address of the tenant application provider such as a Uniform Resource Identifier (URL) or IP address.

The tenant application provider may be tenant app provider 134, from which tenant app 104 may be obtained. CPE 102 may receive the contact information for tenant app provider 134 from a root network manager 112. For example, root network manager 112 may include contact information for tenant app provider 134 in a slice provisioning request to CPE 102 for the provisioning of slice 118. In other embodiments, CPE 102 may receive the contact information for tenant app provider 134 from a separate device, such as a user device on a subscriber network to which the CPE 102 is connected.

At block 320, CPE 102 sends a request for a tenant application to the tenant application provider and obtains the tenant application. CPE 102 may send a request for tenant app 104 to tenant app provider 134. In other embodiments, tenant app 104 may be received at CPE 102 without CPE 102 having to send a request.

In some embodiments, at block 330, CPE 102 may also receive contact information for a secondary network manager from the user, web application program or even from the root manager. At block 340, using the contact information for secondary network manager 114, CPE 102 initiates communication with the secondary networking manager or authenticate communication from the secondary network manager.

CPE 102 may receive the contact information for secondary network manager 114 from tenant application provider 134. The contact information may be delivered with the tenant app 104.

As used herein, the contact information that CPE 102 receives for the secondary network manager is information that is used to enable communication between the CPE and the secondary network manager. For example, the contact information may be used by CPE 102 to initiate communication with the secondary network manager (e.g. an address to which CPE 102 may send communication) or authenticate communications received from the secondary network manager (e.g. a private key).

For example, CPE 102 may send a request for configuration of tenant app 104 to the address of secondary network manager 114. In another embodiment, the contact information for secondary network manager 114 may include a private key that is used to authenticate secondary network manager 114. Secondary network manager 114 may provide a certificate that encapsulates a public key associated with secondary network manager 114 to CPE 102 before or with management communications. CPE 102 may only accept the management communications from secondary network manager 114 after authenticating secondary network manager 114 based on the public key provided by secondary network manager 114 and the private key obtained from tenant app provider 134.

In another embodiment, CPE 102 may communicate with a secondary network manager 114 before communicating with tenant app provider 134. FIG. 4 illustrates another example process of obtaining a tenant application. The process of FIG. 4 may be performed at CPE 102.

At block 410, CPE 102 receives contact information for a secondary network manager. The contact information for the secondary network manager may be received from a root network manager. For example, root network manager 112 may include contact information for secondary network manager 114 in a slice provisioning request to CPE 102 for the provisioning of slice 118. In other embodiments, CPE 102 may receive the contact information for secondary network manager 114 from a separate device, such as a user device on a subscriber network to which CPE 102 is connected or a web application that communicates with CPE 102.

At block 420, CPE 102 obtains, from the secondary network manager, contact information for a tenant application provider from which to obtain the tenant application. The contact information for a tenant application provider may be, for example, the address of the tenant application provider or a public key for the tenant application provider.

At block 430, CPE 102 obtains, using the contact information for the tenant application provider, the tenant application from the tenant application provider. For example, if the contact information for the tenant application provider is an address, CPE 102 may send a request for the tenant application to the received address.

In some embodiments, CPE 102 may specify properties of CPE 102 and the newly provisioned slice that is to be associated with a tenant application when requesting the tenant application. For example, the request for a tenant application sent by CPE 102 to tenant app provider 134 may identify the operating system of CPE 102 and the resources allocated to slice 118, such as the interfaces allocated to slice 118. Tenant app provider 134 may select a tenant app to send to CPE 102 based on the identified properties of CPE 102 or slice 118. For example, if tenant app provider 134 determines that the operating system of CPE 102 can support kernel-mode virtualization, tenant app provider 134 may send a virtual machine that uses kernel-mode virtualization.

In other embodiments, the tenant application may be obtained from the same secondary network manager that will manage the tenant application instead of a separate tenant app provider.

According to various embodiments, one or more of the steps of the processes illustrated in FIG. 2, FIG. 3, and FIG. 4 may be removed or the ordering of the steps may be changed. Additionally, although separate embodiments are discussed herein, any combination of embodiments and/or partial embodiments discussed herein may be combined to form further embodiments.

Based on the foregoing, it will be apparent that embodiments provide numerous benefits and have numerous technical effects. For example, an approach where secondary network manager 114 directly configures and otherwise manages slice 118 of CPE 102 offers many advantages over other approaches, such as approaches where root network manager 112 configures and manages CPE 102 or secondary network manager 114 routes its communications through root network manager 112. By secondary network manager 114 directly configuring and otherwise managing slice 118, secondary network manager 114 is able to retain a greater amount of control over the management of slice 118 while also keeping data sent to and from slice 118 private from root network manager 112.

Embodiments provide numerous benefits over prior practice. Multi-tenancy is known in data centers where a data center (DC) operator sells a service to a DC customer to run a virtual machine (VM) on a DC server. Numerous commercial providers may offer DC hosting to customers who run web sites or other services from the operator's DC rather than operating their own. The DC operator may also offer virtual networking services to better isolate customer data and traffic. In the DC case, there is a two-party customer relationship between DC operator and its customer, which may be governed by a service-level agreement for customer confidentiality and isolation of resident data and traffic. Unlike in the DC, the home network has multi-party relationships: In addition to ISP networking services, users can subscribe to other services offered by other service providers such as services for teleworking, home security, connected energy, home automation, etc. These services can benefit from a multi-manager model. In a multi-manager model, a root network manager (which may be operated by an ISP or a retail user) may cooperate with a tenant network manager (which may be operated by a third-party service provider) on a network such as a home, small office/home office (SOHO), or small/medium business (SMB) network. How the root network manager provisions and tenant network managers configure and share a router for their services is one aspect of the present disclosure.

Thus, there may be three parties in home network services: (1) the home user, (2) an ISP, and (3) any other provider of a home-network service such as teleworking, home security, and etc. Typically the user buys services from the ISP and possibly other service providers. These relationships pose problems to existing management methods where there is a manager and a client in a strictly two-party relationship. Two-party provisioning, configuration and management standards such as TR-069/CWMP do not support multiple managers where a secondary network manager trusts the root network manager to properly provision tenant services on CPE routers, and the root network manager trusts the secondary network manager to properly configure its service on the root network manager's router. Strong isolation and confidentiality may be desired. For example, teleworking enterprises may refuse to share a CPE with others if doing so risks exposure of enterprise data to non-employees.

One approach of using a two-party management arrangement for one or more third parties consists of a root network manager to offering an interface to one or more secondary network managers; the root network manager may virtualize a CPE to the secondary network manager by presenting itself as a CPE to the secondary network manager. This approach may support multiple secondary network managers but without privacy or isolation for the secondary network manager. The root network manager would have visibility into the secondary network manager's action and the parts of the device that the secondary network manager manages. In certain embodiments, the root network manager may be a TR-069 auto-configuration server (ACS) that virtualizes a CPE router for secondary network managers. In such an embodiment, the root network manager relays all commands between the secondary network managers and parts of the CPE that are managed by the secondary network managers such as a CPE interfaces. Thus, the primary manager has total visibility into all exchanges between the secondary network manager and the CPE, which may be undesirable to the entity that operates the secondary network manager. Certain approaches described herein improve upon this by isolating service configuration and management from the root manager and other services.

Approaches described herein may offer separation and isolation for each tenant application and corresponding secondary network manager. In an embodiment, each secondary network manager may communicate with a corresponding virtual machine or other application on the CPE that comprises its own client management agent. The client management agent may communicate with the secondary network manager directly and unmediated through any other management entity. In an embodiment, each slice of the CPE includes a VM with a CWMP agent that communicates with a corresponding secondary network manager using the CWMP protocol. The VMs may be hosted on a computer such as a CPE router that itself is managed by a root network manager. The root network manage may provision a slice of the CPE for a particular tenant network manager. An embodiment extends the TR-069 protocol to include a provisioning function. In an embodiment, a root network manager performs slicing by allocating router interfaces for a secondary network manager but the root network manager is not involved in configuring the interfaces uses by a tenant application, which has a separate secondary network manager. The secondary network manager may configure the interfaces associated with its corresponding slice of the CPE. Data and traffic from the secondary network manager to the tenant app may be isolated from the root network manager and other network managers.

In the retail case, where a CPE is personally owned rather than owned by an ISP, a slicing client may run on the router and authenticate the user before executing provisioning requests from a user device or a proxy for the user. In such a case, the root network manager may be a user device that does not monitor availability of difference CPE resources. In such an embodiment, a slicing client at the CPE may select CPE resources to allocate to a CPE interface. A slicing client may also select CPE resources for allocation used in other embodiments, such as embodiments where the CPE is owned by an ISP.

In the place of a single network manager model, embodiments may include a multiple network manager model with isolation of management actions; an embodiment uses virtual machines on the router to achieve privacy and isolation on the device itself. A root network manager may provision router interfaces and other resources to slices and manage the router but may have practically no visibility as to how a tenant network manager configures its slice of router resources, which may be appropriate for teleworking, home security, and other services that are often governed by high-security policies. Benefits of certain embodiments over prior practice may include but are not limited to: (1) Router resources being be shared among multiple managers, which may be useful in unmanaged home networks, SOHO networks, and SMB networks; (2) each network manager's configuration and management operations being isolated from all the other network managers; (3) each router having a root network manager with access to the host device, but the visibility of the router to the root network manager being limited to provisioning not configuration or management of applications in the corresponding router slice.

### 3.0 IMPLEMENTATION MECHANISMS -- HARDWARE OVERVIEW

According to one embodiment, the techniques described herein are implemented by one or more special-purpose computing devices. The special-purpose computing devices may be hard-wired to perform the techniques, or may include digital electronic devices such as one or more application-specific integrated circuits (ASICs) or field programmable gate arrays (FPGAs) that are persistently programmed to perform the techniques, or may include one or more general purpose hardware processors programmed to perform the techniques pursuant to program instructions in firmware, memory, other storage, or a combination. Such special-purpose computing devices may also combine custom hard-wired logic, ASICs, or FPGAs with custom programming to accomplish the techniques. The special-purpose computing devices may be desktop computer systems, portable computer systems, handheld devices, networking devices or any other device that incorporates hard-wired and/or program logic to implement the techniques.

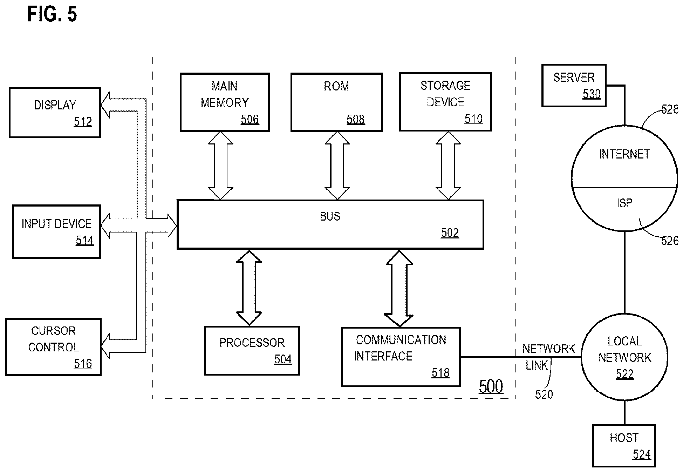

FIG. 5 is a block diagram that illustrates a computer system 500 upon which an embodiment may be implemented. The preferred embodiment is implemented using one or more computer programs running on a network element such as a router device. Thus, in this embodiment, the computer system 500 is a router.

Computer system 500 includes a bus 502 or other communication mechanism for communicating information, and a processor 504 coupled with bus 502 for processing information. Computer system 500 also includes a main memory 506, such as a random access memory (RAM), flash memory, or other dynamic storage device, coupled to bus 502 for storing information and instructions to be executed by processor 504. Main memory 506 also may be used for storing temporary variables or other intermediate information during execution of instructions to be executed by processor 504. Computer system 500 further includes a read only memory (ROM) 508 or other static storage device coupled to bus 502 for storing static information and instructions for processor 504. A storage device 510, such as a magnetic disk, flash memory or optical disk, is provided and coupled to bus 502 for storing information and instructions.

A communication interface 518 may be coupled to bus 502 for communicating information and command selections to processor 504. Interface 518 is a conventional serial interface such as an RS-232 or RS-522 interface. An external terminal 512 or other computer system connects to the computer system 500 and provides commands to it using the interface 518. Firmware or software running in the computer system 500 provides a terminal interface or character-based command interface so that external commands can be given to the computer system.

A switching system 516 is coupled to bus 502 and has an input interface 514 and an output interface 519 to one or more external network elements. The external network elements may include a local network 522 coupled to one or more hosts 524, or a global network such as Internet 528 having one or more servers 530. The switching system 516 switches information traffic arriving on input interface 514 to output interface 519 according to pre-determined protocols and conventions that are well known. For example, switching system 516, in cooperation with processor 504, can determine a destination of a packet of data arriving on input interface 514 and send it to the correct destination using output interface 519. The destinations may include host 524, server 530, other end stations, or other routing and switching devices in local network 522 or Internet 528.

An embodiment is related to the use of computer system 500 for detecting prefixes for multihomed sites and computing backup paths. According to one embodiment, the techniques described herein are provided by computer system 500 in response to processor 504 executing one or more sequences of one or more instructions contained in main memory 506. Such instructions may be read into main memory 506 from another computer-readable medium, such as storage device 510. Execution of the sequences of instructions contained in main memory 506 causes processor 504 to perform the process steps described herein. One or more processors in a multi-processing arrangement may also be employed to execute the sequences of instructions contained in main memory 506. In alternative embodiments, hard-wired circuitry may be used in place of or in combination with software instructions to implement the disclosure. Thus, embodiments of the disclosure are not limited to any specific combination of hardware circuitry and software.

The term "computer-readable medium" as used herein refers to any non-transitory media that store data and/or instructions that cause a machine to operation in a specific fashion. Such storage media may comprise non-volatile media and/or volatile media. Non-volatile media includes, for example, optical or magnetic disks, such as storage device 510. Volatile media includes dynamic memory, such as main memory 506. Common forms of storage media include, for example, a floppy disk, a flexible disk, hard disk, solid state drive, magnetic tape, or any other magnetic data storage medium, a CD-ROM, any other optical data storage medium, any physical medium with patterns of holes, a RAM, a PROM, and EPROM, a FLASH-EPROM, NVRAM, any other memory chip or cartridge.

Common forms of computer-readable storage media include, for example, a floppy disk, a flexible disk, hard disk, magnetic tape, or any other magnetic medium, a CD-ROM, any other optical medium, punch cards, paper tape, any other physical medium with patterns of holes, a RAM, a PROM, and EPROM, a FLASH-EPROM, any other memory chip or cartridge, or any other tangible storage medium from which a computer can read.

Various forms of computer readable storage media may be involved in carrying one or more sequences of one or more instructions to processor 504 for execution. For example, the instructions may initially be carried on a magnetic disk of a remote computer. The remote computer can load the instructions into its dynamic memory and send the instructions over a telephone line using a modem. A modem local to computer system 500 can receive the data on the telephone line and use an infrared transmitter to convert the data to an infrared signal. An infrared detector coupled to bus 502 can receive the data carried in the infrared signal and place the data on bus 502. Bus 502 carries the data to main memory 506, from which processor 504 retrieves and executes the instructions. The instructions received by main memory 506 may optionally be stored on storage device 510 either before or after execution by processor 504.

Communication interface 518 also provides a two-way data communication coupling to a network link 520 that is connected to a local network 522. For example, communication interface 518 may be an integrated services digital network (ISDN) card or a modem to provide a data communication connection to a corresponding type of telephone line. As another example, communication interface 518 may be a local area network (LAN) card to provide a data communication connection to a compatible LAN. Wireless links may also be implemented. In any such implementation, communication interface 518 sends and receives electrical, electromagnetic or optical signals that carry digital data streams representing various types of information.

Network link 520 typically provides data communication through one or more networks to other data devices. For example, network link 520 may provide a connection through local network 522 to a host computer 524 or to data equipment operated by an Internet Service Provider (ISP) 526. ISP 526 in turn provides data communication services through the world wide packet data communication network now commonly referred to as the "Internet" 528. Local network 522 and Internet 528 both use electrical, electromagnetic or optical signals that carry digital data streams. The signals through the various networks and the signals on network link 520 and through communication interface 518, which carry the digital data to and from computer system 500, are exemplary forms of carrier waves transporting the information.

Computer system 500 can send messages and receive data, including program code, through the network(s), network link 520 and communication interface 518. In the Internet example, a server 530 might transmit a requested code for an application program through Internet 528, ISP 526, local network 522 and communication interface 518. In accordance with an embodiment, one such downloaded application provides for fast convergence as described herein.

The received code may be executed by processor 504 as it is received, and/or stored in storage device 510, or other non-volatile storage for later execution. In this manner, computer system 500 may obtain application code in the form of a carrier wave.

### 4.0 EXTENSIONS AND ALTERNATIVES

In the foregoing specification, embodiments of the disclosure have been described with reference to numerous specific details that may vary from implementation to implementation. Thus, the sole and exclusive indicator of what is the disclosure, and is intended by the applicants to be the disclosure, is the appended set of claims. Any definitions expressly set forth herein for terms contained in such claims shall govern the meaning of such terms as used in the claims. Hence, no limitation, element, property, feature, advantage or attribute that is not expressly recited in a claim should limit the scope of such claim in any way. The specification and drawings are, accordingly, to be regarded in an illustrative rather than a restrictive sense.

## Claims

1. A method comprising:
at a customer premises equipment, CPE, (102) comprising one or more network interfaces and a plurality of slices:
receiving, from a root network manager (112), a slice provisioning instruction to provision a slice of the CPE (102) for a tenant application, wherein the slice provisioning instruction identifies at least one network interface of the one or more network interfaces to allocate to the slice;
provisioning the slice of the CPE (102), wherein provisioning the slice comprises allocating CPE resources including the at least one network interface to the slice of the customer premises equipment;
obtaining the tenant application;
storing data associating the tenant application with the slice of the CPE (102);
receiving, directly from a secondary network manager (114) associated with the tenant application, a management instruction for managing the tenant application;
executing the management instruction only in relation to the slice, wherein the tenant application is a particular virtual machine; wherein the method further comprises executing the management instruction only in relation to the particular virtual machine in isolation from other virtual machines in other slices of the CPE (102) different than the slice.

2. The method of Claim 1 wherein the secondary network manager (114) is associated with a service provider that is not associated with the root network manager (112).

3. The method of Claim 1 wherein the tenant application is one of a plurality of different tenant applications at the CPE (102), wherein each tenant application of the plurality of different tenant applications is associated with a different slice of the CPE (102) and a different secondary network manager of a plurality of secondary network managers.

4. The method of Claim 3 wherein the root network manager (112) is associated with an internet
service provider and the secondary network manager (114) is associated with a service provider that is different than the internet service provider and is of one or more of a teleworking service provider, a home security service provider, a home automation service provider, or an entertainment service provider.

5. The method of Claim 1 further comprising:
receiving, from the root network manager (112), contact information for a tenant application provider;
obtaining, from the tenant application provider, the tenant application and contact information for the secondary network manager (114).

6. The method of Claim 5 further comprising:
receiving, from the root network manager (112), contact information for the secondary network manager (114);
obtaining, from the secondary network manager (114), contact information for the tenant application provider;
obtaining, from the tenant application provider, the tenant application.

7. The method of Claim 1 further comprising:
receiving, from the secondary network manager (114), configuration instructions for configuring the tenant application, wherein the configuration instructions for configuring the tenant application specify one or more network prefixes to associate with the at least one network interfaces.

8. The method of Claim 1 further comprising:
determining, at the customer premises equipment, particular CPE resources to include in the slice, wherein the root network manager (112) does not identify the particular CPE resources for inclusion in the slice.

9. The method of Claim 1 further comprising:
receiving, from the root network manager (112), an identification of particular CPE resources to include in the slice.

10. A consumer premises equipment, CPE, (102) comprising:
one or more processors;
one or more network interfaces; one or more non-transitory computer storage media coupled to the one or more processors and comprising one or more sequences of instructions which, when executed by the one or more processors, cause performing a method according to any preceding claim.

11. One or more non-transitory computer-readable storage media comprising one or more sequences of instructions which when executed cause one or more processors to perform a method according to any of claims 1 to 9.

## Patentansprüche

1. Verfahren, aufweisend:
an einem Customer Premises Equipment, CPE, (102), das eine oder mehrere Netzwerkschnittstellen und mehrere Slices aufweist,
Empfangen einer Slice-Bereitstellungsanweisung von einem Stamm-Netzwerkmanager (112) zum Bereitstellen eines Slices des CPE (102) für eine Mandantenanwendung, wobei die Slice-Bereitstellungsanweisung mindestens eine Netzwerkschnittstelle der einen oder mehreren Netzwerkschnittstellen identifiziert, die dem Slice zuzuweisen sind;
Bereitstellen des Slices des CPE (102), wobei das Bereitstellen des Slices das Zuweisen von CPE-Ressourcen, einschließlich der mindestens einen Netzwerkschnittstelle, zu dem Slice des Customer Premises Equipment aufweist;
Erhalten der Mandantenanwendung;
Speichern von Daten, welche dem Slice des CPE (102) die Mandantenanwendung zuordnen;
Empfangen einer Verwaltungsanweisung zum Verwalten der Mandantenanwendung direkt von einem sekundären Netzwerkmanager (114), welcher der Mandantenanwendung zugeordnet ist;
Ausführen der Verwaltungsanweisung nur in Bezug auf das Slice, wobei die Mandantenanwendung eine bestimmte virtuelle Maschine ist; wobei das Verfahren ferner das Ausführen der Verwaltungsanweisung nur in Bezug auf die bestimmte virtuelle Maschine isoliert von anderen virtuellen Maschinen in anderen Slices des CPE (102), die sich von dem Slice unterscheiden, aufweist.

2. Verfahren nach Anspruch 1, wobei der sekundäre Netzwerkmanager (114) einem Dienstanbieter zugeordnet ist, der dem Stamm-Netzwerkmanager (112) nicht zugeordnet ist.

3. Verfahren nach Anspruch 1, wobei die Mandantenanwendung eine von mehreren unterschiedlichen Mandantenanwendungen an dem CPE (102) ist, wobei jede Mandantenanwendung der mehreren unterschiedlichen Mandantenanwendungen einem unterschiedlichen Slice des CPE (102) und einem unterschiedlichen sekundären Netzwerkmanager mehrerer sekundärer Netzwerkmanager zugeordnet ist.

4. Verfahren nach Anspruch 3, wobei der Stamm-Netzwerkmanager (112) einem Internet-Dienstanbieter zugeordnet ist und der sekundäre Netzwerkmanager (114) einem Dienstanbieter zugeordnet ist, der sich von dem Internet-Dienstanbieter unterscheidet und einer oder mehrere von einem Telearbeit-Dienstanbieter, einem Haussicherheits-Dienstanbieter, einem Hausautomations-Dienstanbieter oder einem Unterhaltungs-Dienstanbieter ist.

5. Verfahren nach Anspruch 1, ferner Folgendes aufweisend:
Empfangen von Kontaktinformationen für einen Mandantenanwendungsanbieter von dem Stamm-Netzwerkmanager (112);
Erhalten der Mandantenanwendung und Kontaktinformationen für den sekundären Netzwerkmanager (114) von dem Mandantenanwendungsanbieter.

6. Verfahren nach Anspruch 5, ferner Folgendes aufweisend:
Empfangen von Kontaktinformationen für den zweiten Netzwerkmanager (114) von dem Stamm-Netzwerkmanager (112);
Erhalten von Kontaktinformationen für den Mandantenanwendungsanbieter von dem sekundären Stamm-Netzwerkmanager (114);
Erhalten der Mandantenanwendung von dem Mandantenanwendungsanbieter.

7. Verfahren nach Anspruch 1, ferner Folgendes aufweisend:
Empfangen von Konfigurationsanweisungen zum Konfigurieren der Mandantenanwendung von dem sekundären Netzwerkmanager (114), wobei die Konfigurationsanweisungen zum Konfigurieren der Mandantenanwendung ein oder mehrere Netzwerkpräfixe angeben, die der mindestens einen Netzwerkschnittstelle zuzuordnen sind.

8. Verfahren nach Anspruch 1, ferner Folgendes aufweisend:
Bestimmen bestimmter CPE-Ressourcen, die in das Slice einzuschließen sind, bei dem Customer Premises Equipment, wobei der Stamm-Netzwerkmanager (112) die bestimmten CPE-Ressourcen zur Einschließung in das Slice nicht identifiziert.

9. Verfahren nach Anspruch 1, ferner Folgendes aufweisend:
Empfangen einer Identifikation bestimmter CPE-Ressourcen, die in das Slice einzuschließen sind, von dem Stamm-Netzwerkmanager (112).

10. Consumer Premises Equipment, CPE, (102), aufweisend:
einen oder mehrere Prozessoren;
eine oder mehrere Netzwerkschnittstellen;
ein oder mehrere nicht flüchtige Computerspeichermedien, die mit dem einen oder den mehreren Prozessoren gekoppelt sind und eine oder mehrere Sequenzen von Anweisungen aufweisen, die, wenn sie von dem einen oder den mehreren Prozessoren ausgeführt werden, die Durchführung eines Verfahrens nach einem der vorhergehenden Ansprüche bewirken.

11. Ein oder mehrere nicht flüchtige computerlesbare Speichermedien, die eine oder mehrere Sequenzen von Anweisungen speichern, die bei Ausführung bewirken, dass ein oder mehrere Prozessoren ein Verfahren nach einem der Ansprüche 1 bis 9 durchführen.

## Revendications

1. Procédé comprenant :
au niveau d'un équipement de local de client, CPE, (102) comprenant une ou plusieurs interfaces réseau et une pluralité de tranches :
la réception, à partir d'un gestionnaire de réseau racine (112), d'une instruction d'approvisionnement de tranche pour approvisionner une tranche du CPE (102) pour une application de locataire, dans lequel l'instruction d'approvisionnement de tranche identifie au moins une interface réseau des une ou plusieurs interfaces réseau à allouer à la tranche ;
l'approvisionnement de la tranche du CPE (102), dans lequel l'approvisionnement de la tranche comprend l'allocation de ressources de CPE incluant l'au moins une interface réseau à la tranche de l'équipement de local de client ;
l'obtention de l'application de locataire ;
le stockage de données associant l'application de locataire à la tranche du CPE (102) ;
la réception, directement à partir d'un gestionnaire de réseau secondaire (114) associé à l'application de locataire, d'une instruction de gestion pour gérer l'application de locataire ;
l'exécution de l'instruction de gestion seulement en relation avec la tranche, dans lequel l'application de locataire est une machine virtuelle particulière ; dans lequel le procédé comprend en outre
l'exécution de l'instruction de gestion seulement en relation avec la machine virtuelle particulière isolément par rapport à d'autre machines virtuelles dans d'autres tranches du CPE (102) différentes de la tranche.

2. Procédé selon la revendication 1, dans lequel le gestionnaire de réseau secondaire (114) est associé à un fournisseur de services qui n'est pas associé au gestionnaire de réseau racine (112).

3. Procédé selon la revendication 1, dans lequel l'application de locataire est l'une d'une pluralité d'applications de locataire différentes au niveau du CPE (102), dans lequel chaque application de locataire de la pluralité d'applications de locataire différentes est associée à une couche différente du CPE (102) et un gestionnaire de réseau secondaire différent d'une pluralité de gestionnaires de réseau secondaire.

4. Procédé selon la revendication 3, dans lequel le gestionnaire de réseau racine (112) est associé à un fournisseur de services Internet et le gestionnaire de réseau secondaire (114) est associé à un fournisseur de services qui est différent du fournisseur de services Internet et est un ou plusieurs parmi un fournisseur de services de télétravail, un fournisseur de services de sécurité domestique, un fournisseur de services de domotique ou un fournisseur de services de divertissements.

5. Procédé selon la revendication 1, comprenant en outre :
la réception, à partir du gestionnaire de réseau racine (112), d'informations de contact pour un fournisseur d'applications de locataire ;
l'obtention, à partir du fournisseur d'applications de locataire, de l'application de locataire et d'informations de contact pour le gestionnaire de réseau secondaire (114).

6. Procédé selon la revendication 5, comprenant en outre :
la réception, à partir du gestionnaire de réseau racine (112), d'informations de contact pour le gestionnaire de réseau secondaire (114) ;
l'obtention, à partir du gestionnaire de réseau secondaire (114), d'informations de contact pour le fournisseur d'applications de locataire ;
l'obtention, à partir du fournisseur d'applications de locataire, de l'application de locataire.

7. Procédé selon la revendication 1, comprenant en outre :
la réception, à partir du gestionnaire de réseau secondaire (114), d'instructions de configuration pour configurer l'application de locataire, dans lequel les instructions de configuration pour configurer l'application de locataire spécifient un ou plusieurs préfixes de réseau à associer à l'au moins une interface réseau.

8. Procédé selon la revendication 1, comprenant en outre :
la détermination, au niveau de l'équipement de local de client, de ressources de CPE particulières à inclure dans la tranche, dans lequel le gestionnaire de réseau racine (112) n'identifie pas les ressources de CPE particulières pour l'inclusion dans la tranche.

9. Procédé selon la revendication 1, comprenant en outre :
la réception, à partir du gestionnaire de réseau racine (112), d'une identification des ressources de CPE particulières à inclure dans la tranche.

10. Equipement de local de client, CPE, (102) comprenant :
un ou plusieurs processeurs ;
une ou plusieurs interfaces réseau ; un ou plusieurs supports de stockage informatiques non transitoires couplés aux un ou plusieurs processeurs et comprenant une ou plusieurs séquences d'instructions qui, quand elles sont exécutées par les un ou plusieurs processeurs, entraînement l'exécution d'un procédé selon une quelconque revendication précédente.

11. Un ou plusieurs supports de stockage lisibles par ordinateur non transitoires comprenant une ou plusieurs séquences d'instructions qui, quand elles sont exécutées, amènent un ou plusieurs processeurs à réaliser un procédé selon l'une quelconque des revendications 1 à 9.
